# EUROPEAN PATENT SPECIFICATION

(11) **EP 1 674 302 B1**
(45) Date of publication and mention of the grant of the patent: **01.04.2009**
(21) Application number: 04030433.9
(22) Date of filing: 22.12.2004
(51) Int. Cl.: B60C 23/06

(54) **Low tire pressure detection system**
System zur Erkennung eines Reifendruckverlustes
Système de détection d'une basse pression dans un pneumatique

(43) Date of publication of application: 28.06.2006
(73) Proprietor: Ford Global Technologies, LLC, Dearborn, MI 48126 (US)
(72) Inventor: Rothoff, Marcus, 417 29 Göteborg (SE)
(74) Representative: Hammond, Andrew David

(56) References cited:
- US-A- 4 574 267
- PATENT ABSTRACTS OF JAPAN vol. 012, no. 227 (M-713), 28 June 1988 (1988-06-28) & JP 63 022707 A (KOMATSU LTD), 30 January 1988 (1988-01-30)

## Description

### Technical field

The present invention relates to a system for automatically detecting deviations in tire inflation pressure from a desired value and, in particular, a system for automatically detecting deviations in tire inflation pressure in an automotive vehicle in accordance with the preamble of claim 1.

### Background of the invention

The operational life of an under-inflated or flat tire of an automotive vehicle is low and dependent, i.a. on the weight of the vehicle, i.e. the normal force on the tire. Further, the operational life of the under-inflated tire is normally limited by the heat build-up in the tire, depending on factors such as driving speed, vehicle load, normal force, etc. Thus it is important to detect under-inflation or a possible flat tire as soon as possible in order to give the vehicle operator the possibility to reduce speed and search for a service location. It would also be useful for the vehicle operator to receive an indication of which tire is under-inflated in order to be able to inflate the correct tire when having reached a service location.

The detection of flat tires is usually a trivial exercise since a flat tire has an immediate and noticeable influence on the handling characteristics of the vehicle. However, lately tires referred to as a "run flat" tires, are finding increasing use on automotive vehicles. Such tires are designed to support the automotive vehicle even in the event of a significant loss in tire pressure permitting the vehicle to be driven for a short distance at reduced speed. Unlike a puncture in a conventional tire, a puncture in a "run flat" tire may not be readily perceptible to the operator of the automotive vehicle.

US 4 574 267 relates to a tire inflation pressure detector which senses changes in tire pressure by detecting the changes in the spring rate of the tire which result from changes in tire pressure. An accelerometer is mounted on a vehicle suspension component adjacent the tire. The accelerometer is sensitive to vertical accelerations experienced by the tire and provides a signal indicative thereof. A filter bank processes the accelerometer signal so as to define the frequency distribution of the accelerometer output signal. A microcomputer responds to the signals provided by the filters and locates the low frequency resonance peak whose position is influenced by the tire spring rate. The microcomputer determines whether tire pressure is low in accordance with the frequency of the resonance peak.

The resonance peak relied on in US 4 574 267 is sought after within the frequency band of 10-20 Hz. However, this frequency band will also contain a lot of noise emanating from unsprung components of the vehicle tire suspension, making the determination cumbersome and potentially unreliable.

### Summary of the invention

One object of the invention is to provide an improved system for automatically detecting deviations in tire inflation pressure from a desired value and in particular an improved system for automatically detecting deviations in tire inflation pressure in an automotive vehicle having means for generating a respective electrical signal indicative of vertical accelerations experienced by each respective tire of said vehicle, providing for simplified signals processing and thus able to provide a more reliable detection of deviations in tire inflation pressure.

This object is achieved in accordance with the system of claim 1.

Thanks to the provision of filtering means for filtering said respective electrical signals from said generating means for obtaining filtered electrical signals within the frequency bands of 5-10Hz and 20-30Hz, and means for determining a respective root mean square value over a predetermined time period from each of said filtered electrical signals, and comparing means for comparing said determined respective root mean square values of the vertical accelerations experienced by each said respective tire with the determined respective root mean square values of the vertical accelerations experienced by the other tires of said vehicle, and for generating a signal indicative of a difference therebetween, and alarm means responsive to said comparing means for providing an alarm to a driver of said vehicle when said signal generated by said comparing means indicates there is a difference between one of said determined respective root mean square values of the accelerations experienced and the other greater than a predetermined amount, this system is able to provide a more reliable detection of deviations in tire inflation pressure than previously known systems.

Preferred embodiments are listed in the dependent claims.

### Description of drawings

In the following, the invention will be described in greater detail with reference to attached drawings, in which

Fig. 1 is a schematic illustration of the operation of a system for automatically detecting deviations in tire inflation pressure in an automotive vehicle in accordance with the present invention,

Fig. 2 is a schematic illustration of the connection between root mean square (RMS) value and tire pressure.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of preferred embodiments

The present invention is based on the realization that there is a relationship between the ability of the tires of an automotive vehicle to isolate the vehicle from road input, i.e. unevenness of the road, and the inflation pressure of the tires of the automotive vehicle. It has been found that this relationship may readily be determined when studying the acceleration input from an unsprung mass member of the tire suspension of the vehicle within the frequency bands of 5-10Hz and 20-30Hz. Frequencies below 5 Hz, as well as frequencies between 10-20Hz and frequencies above 30Hz have been found to contain a lot of noise caused e.g. by the body of the vehicle, natural frequencies of the unsprung mass member of the tire suspension, etc.

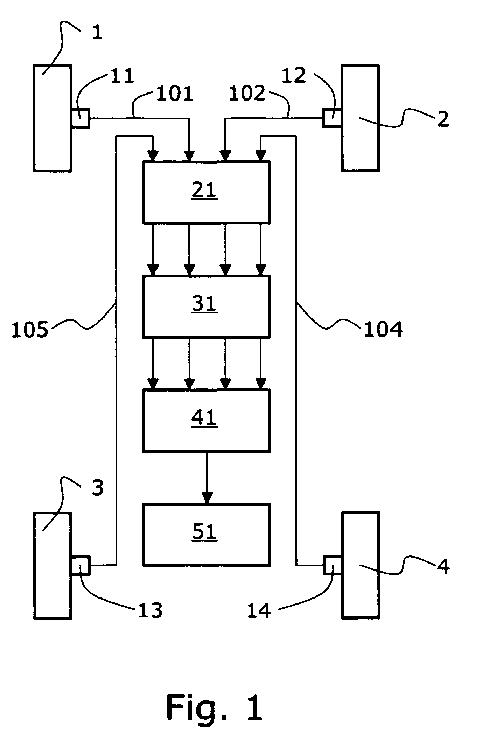

A simplified diagram of a system for automatically detecting deviations in tire inflation pressure in an automotive vehicle is shown in Fig. 1. An unsprung mass member of a respective tire suspension, such as a spindle supporting the tire, i.e., of the front left wheel 1, the front right wheel 2, the rear left wheel 3, and the rear right wheel 4, is equipped with means 11, 12, 13, 14, for generating a respective electrical signal indicative of vertical accelerations experienced by each respective tire of the vehicle.

The signals emanating from these generating means 11, 12, 13, 14, are transmitted over lines 101, 102, 103, 104 to filtering means 21, which are arranged for filtering the respective electrical signals from the generating means 11, 12, 13, 14, for obtaining filtered electrical signals within the frequency bands of 5-10Hz and 20-30Hz.

The signals emanating from these filtering means 21 are transmitted to means 31 for determining a respective RMS (root mean square) value over a predetermined time period from each of the filtered electrical signals. The determining means 31 give the RMS values of the filtered signals in conventional fashion.

The signals emanating from these determining means 31 are transmitted to comparing means 41 for comparing the determined respective RMS values of the vertical accelerations experienced by each respective tire 1, 2, 3, 4 with the determined respective RMS values of the vertical accelerations experienced by the other tires of the vehicle, and for generating a signal indicative of a difference therebetween.

Finally, the signal emitted by the comparing means 41 is transmitted to alarm means 51 responsive to the comparing means 41 for providing an alarm to a driver of the vehicle when the signal generated by the comparing means 41 indicates there is a difference between one of the determined respective RMS values of the accelerations experienced and the other greater than a predetermined amount.

In one embodiment of the present invention the means 11, 12, 13, 14, for generating the respective electrical signals indicative of vertical accelerations experienced by each respective tire 1, 2, 3, 4 of the vehicle comprises a respective acceleration sensor, such as an accelerometer, positioned on an unsprung mass member of a respective tire suspension of the vehicle.

In a further embodiment of the present invention the means 11, 12, 13, 14, for generating the respective electrical signals indicative of vertical accelerations experienced by each respective tire 1, 2, 3, 4 of the vehicle comprises a respective displacement sensor, positioned between a sprung mass member of the vehicle, such as the body of the vehicle, and an unsprung mass member of a respective tire suspension of the vehicle.

In order to provide reliable data, the predetermined time period ought to be at least 2 minutes. In a preferred embodiment the predetermined time period is between 2 and 5 minutes. Depending on the particular configuration and components relied on when implementing the present invention the predetermined time period may in some instances need to exceed 5 minutes.

In yet a further embodiment of the present invention the comparing means 41 are further arranged for comparing the determined respective RMS values of the vertical accelerations experienced by each respective tire 1, 2, 3, 4 with a pre-determined limit value, and for generating a signal indicative of the limit value being exceeded. The alarm means 51 are further arranged to be responsive to the comparing means 41 for providing an alarm to a driver of the vehicle when a signal indicative of the limit value being exceeded is generated by the comparing means 41.

In a preferred embodiment of the present invention the alarm means 51 comprises means for providing in the alarm to the driver of the vehicle an indication of which tire 1, 2, 3, 4 has deviating tire inflation pressure. This also makes the system in accordance with the present invention suitable for combination with other tire pressure monitoring systems unable to discriminate between the tires 1, 2, 3, 4, e.g. systems relying on pressure sensors inside each respective tire 1, 2, 3, 4, being arranged to transmit identical alarm signals upon detection of deviating tire pressure.

In a further embodiment of the present invention the comparing means 41 are further arranged for determining an amplitude increase exceeding a pre-determined value in the electrical signal indicative of vertical acceleration experienced by one tire 1, 2, 3, 4, over a predetermined time period, and for generating a signal indicative of such an amplitude increase. The alarm means 51 are further arranged to be responsive to the comparing means 41 for providing an alarm to a driver of the vehicle indicating a flat tire when a signal indicative of such an amplitude increase is generated by the comparing means 41.

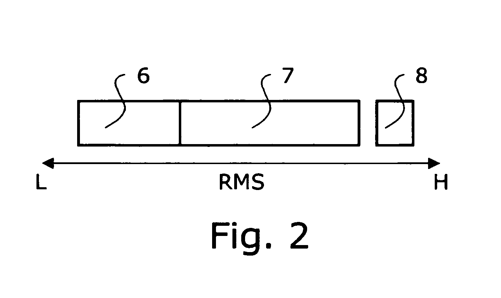

Fig 2 illustrates schematically how the RMS as provided in accordance with the present invention is dependent on tire inflation pressure. The letter (L) indicates a low RMS value and the letter (H) a high RMS value. Within the area 6 the tire inflation pressure is too low, for regular tires probably below 1.5 bar and down towards 0.5 bar. After that, the tire is unlikely to carry the weight of the vehicle, whereupon the RMS value will move rapidly to area 8. In area 8 the RMS value is high due to high acceleration input caused by the vehicle running on the road surface on practically the wheel rim or a run flat reinforcement of the tire. Area 7 indicates normally inflated tires, ranging from low-profile tires having high inflation pressure to softer high-profiled tires having lower inflation pressure. Within this area 7, a comparison with other similar tires on the same vehicle may be used to identify loss of tire pressure in accordance with the present invention.

In accordance with the present invention an automotive vehicle is also envisaged, which comprises a system for automatically detecting deviations in tire inflation pressure as described above. Hereby the vehicle is provided with more reliable detection of deviations in tire inflation pressure than what has previously been available.

The invention is not limited to the above-described embodiments, but may be varied within the scope of the following claims.

## Claims

1. A system for automatically detecting deviations in tire inflation pressure in an automotive vehicle, said system comprising:
means (11, 12, 13, 14) for generating a respective electrical signal indicative of vertical accelerations experienced by each respective tire (1, 2, 3, 4) of said vehicle;
**characterized in that** it further comprises:
filtering means (21) for filtering said respective electrical signals from said generating means (11, 12, 13, 14) for obtaining filtered electrical signals within the frequency bands of 5-10Hz and 20-30Hz;
means (31) for determining a respective root mean square value over a predetermined time period from each of said filtered electrical signals;
comparing means (41) for comparing said determined respective root mean square values of the vertical accelerations experienced by each said respective tire (1, 2, 3, 4) with the determined respective root mean square values of the vertical accelerations experienced by the other tires (1, 2, 3, 4) of said vehicle, and for generating a signal indicative of a difference therebetween; and
alarm means (51) responsive to said comparing means (41) for providing an alarm to a driver of said vehicle when said signal generated by said comparing means (41) indicates there is a difference between one of said determined respective root mean square values of the accelerations experienced and the other greater than a predetermined amount.

2. A system for automatically detecting deviations in tire inflation pressure in automotive vehicles according to claim 1,
**characterized in that** the means (11, 12, 13, 14) for generating a respective electrical signal indicative of vertical accelerations experienced by each respective tire (1, 2, 3, 4) of said vehicle comprises a respective acceleration sensor positioned on an unsprung mass member of a respective tire suspension of said vehicle.

3. A system for automatically detecting deviations in tire inflation pressure in automotive vehicles according to claim 1,
**characterized in that** the means (11, 12, 13, 14) for generating a respective electrical signal indicative of vertical accelerations experienced by each respective tire (1, 2, 3, 4) of said vehicle comprises a respective displacement sensor, positioned between a sprung mass member of said vehicle and an unsprung mass member of a respective tire suspension of said vehicle.

4. A system for automatically detecting deviations in tire inflation pressure in automotive vehicles according to any one of claims 1 to 3,
**characterized in** said predetermined time period is at least 2 minutes.

5. A system for automatically detecting deviations in tire inflation pressure in automotive vehicles according to any one of claims 1 to 3,
**characterized in** said predetermined time period is between 2 and 5 minutes.

6. A system for automatically detecting deviations in tire inflation pressure in automotive vehicles according to any one of claims 1 to 3,
**characterized in** said predetermined time period is at least 5 minutes.

7. A system for automatically detecting deviations in tire inflation pressure in automotive vehicles according to any one of the preceding claims,
**characterized in that** said comparing means (41) is further arranged for comparing said determined respective root mean square values of the vertical accelerations experienced by each said respective tire (1, 2, 3, 4) with a pre-determined limit value, and for generating a signal indicative of said limit value being exceeded; and
said alarm means (51) further being arranged to be responsive to said comparing means (41) for providing an alarm to a driver of said vehicle when a signal indicative of said limit value being exceeded is generated by said comparing means (41).

8. A system for automatically detecting deviations in tire inflation pressure in automotive vehicles according to any one of the preceding claims,
**characterized in that** said alarm means (51) comprises means for providing in said alarm to said driver of said vehicle an indication of which tire (1, 2, 3, 4) has deviating tire inflation pressure.

9. A system for automatically detecting deviations in tire inflation pressure in automotive vehicles according to any one of the preceding claims,
**characterized in that:**
said comparing means (41) is further arranged for determining an amplitude increase exceeding a pre-determined value in the electrical signal indicative of vertical acceleration experienced by one tire (1, 2, 3, 4) over a predetermined time period, and
for generating a signal indicative of such an amplitude increase;
said alarm means (51) further being arranged to be responsive to said comparing means (41) for providing an alarm to a driver of said vehicle indicating a flat tire when a signal indicative of such an amplitude increase is generated by said comparing means (41).

10. An automotive vehicle, **characterized in that** it comprises a system for automatically detecting deviations in tire inflation pressure according to any one of the preceding claims.

## Patentansprüche

1. Ein System zur automatischen Erkennung von Abweichungen im Reifenluftdruck in einem Kraftfahrzeug, umfassend Mittel (11, 12, 13, 14) zum Erzeugen eines spezifischen elektrischen Signals, das auf vertikale Beschleunigungen hinweist, die jeder entsprechende Reifen (1, 2, 3, 4) des Fahrzeugs erfährt, **dadurch gekennzeichnet, dass** es weiter folgendes umfasst:
Filtermittel (21) zum Filtern der genannten spezifischen elektrischen Signale von den genannten erzeugenden Mitteln (11, 12, 13, 14), zum Gewinnen gefilterter elektrischer Signale in den Frequenzbereichen von 5 bis 10 Hertz und 20 bis 30 Hertz;
Mittel (31) zum Ermitteln eines entsprechenden Effektivwertes (RMS) von jedem dieser gefilterten elektrischen Signale über eine vorbestimmte Zeitspanne;
Vergleichsmittel (41) zum Vergleichen dieser ermittelten spezifischen Effektivwerte der bei jedem der entsprechenden Reifen (1, 2, 3, 4) auftretenden vertikalen Beschleunigungen mit den ermittelten spezifischen Effektivwerten der bei den anderen Reifen (1, 2, 3, 4) des Fahrzeugs auftretenden vertikalen Beschleunigungen, und zum Erzeugen eines Signals, das einen Unterschied zwischen selbigen anzeigt; und
Alarmmittel (51), die auf diese vergleichenden Mittel (41) reagieren, zum Übermitteln eines Alarms an den Fahrer des Fahrzeugs, wenn das von den vergleichenden Mitteln (41) erzeugte Signal anzeigt, dass ein Unterschied zwischen einem dieser ermittelten spezifischen Effektivwerte der auftretenden Beschleunigungen und den anderen größer als ein vorbestimmter Wert ist.

2. Ein System zur automatischen Erkennung von Abweichungen im Reifenluftdruck in einem Kraftfahrzeug nach Anspruch 1, **dadurch gekennzeichnet, dass** das Mittel (11, 12, 13, 14) zum Erzeugen eines spezifischen elektrischen Signals, das auf vertikale Beschleunigungen hinweist, die jeder entsprechende Reifen (1, 2, 3, 4) des Fahrzeugs erfährt, einen entsprechenden Beschleunigungssensor umfasst, der an einem Bauteil der ungefederten Masse einer entsprechenden Radaufhängung des Fahrzeugs angeordnet ist.

3. Ein System zur automatischen Erkennung von Abweichungen im Reifenluftdruck in einem Kraftfahrzeug nach Anspruch 1, **dadurch gekennzeichnet, dass** das Mittel (11, 12, 13, 14) zum Erzeugen eines spezifischen elektrischen Signals, das auf vertikale Beschleunigungen hinweist, die jeder entsprechende Reifen (1, 2, 3, 4) des Fahrzeugs erfährt, einen entsprechenden Sensor für Verlagerung umfasst, der zwischen einem Bauteil der gefederten Masse des Fahrzeugs und einem Bauteil der ungefederten Masse einer entsprechenden Radaufhängung des Fahrzeugs angeordnet ist.

4. Ein System zur automatischen Erkennung von Abweichungen im Reifenluftdruck in einem Kraftfahrzeug nach einem der Ansprüche 1 bis 3, **dadurch gekennzeichnet, dass** die vorbestimmte Zeitspanne mindestens 2 Minuten beträgt.

5. Ein System zur automatischen Erkennung von Abweichungen im Reifenluftdruck in einem Kraftfahrzeug nach einem der Ansprüche 1 bis 3, **dadurch gekennzeichnet, dass** die vorbestimmte Zeitspanne zwischen 2 und 5 Minuten beträgt.

6. Ein System zur automatischen Erkennung von Abweichungen im Reifenluftdruck in einem Kraftfahrzeug nach einem der Ansprüche 1 bis 3, **dadurch gekennzeichnet, dass** die vorbestimmte Zeitspanne mindestens 5 Minuten beträgt.

7. Ein System zur automatischen Erkennung von Abweichungen im Reifenluftdruck in einem Kraftfahrzeug nach einem der vorangehenden Ansprüche, **dadurch gekennzeichnet, dass** das Vergleichsmittel (41) des weiteren zum Vergleichen der ermittelten spezifischen Effektivwerte der bei jedem der entsprechenden Reifen (1, 2, 3, 4) auftretenden vertikalen Beschleunigungen mit einem vorbestimmten Grenzwert und zum Erzeugen eines Signals eingerichtet ist, welches ein Überschreiten dieses Grenzwertes anzeigt; und wobei
das Alarmmittel (51) des weiteren dazu eingerichtet ist, auf das Vergleichsmittel (41) zu reagieren, um einen Alarm an einen Fahrer des Fahrzeugs zu übermitteln, wenn ein Signal vom Vergleichsmittel (41) erzeugt wird, das ein Überschreiten dieses Grenzwertes anzeigt.

8. Ein System zur automatischen Erkennung von Abweichungen im Reifenluftdruck in einem Kraftfahrzeug nach einem der vorangehenden Ansprüche, **dadurch gekennzeichnet, dass** das Alarmmittel (51) Mittel umfasst, um in die Warnung an den Fahrer des Fahrzeugs einen Hinweis darüber einzufügen, welcher der Reifen (1, 2, 3, 4) einen abweichenden Reifenluftdruck hat.

9. Ein System zur automatischen Erkennung von Abweichungen im Reifenluftdruck in einem Kraftfahrzeug nach einem der vorangehenden Ansprüche, **dadurch gekennzeichnet, dass** das Vergleichsmittel (41) des weiteren zum Festellen eines Ansteigens der Amplitude, das über einem vorbestimmten Wert liegt, im elektrischen Signal, das auf vertikale Beschleunigungen hinweist, die jeder entsprechende Reifen (1, 2, 3, 4) des Fahrzeugs erfährt, über eine vorbestimmte Zeitspanne hinweg, sowie zum Erzeugen eines Signals, das solch ein Ansteigen der Amplitude anzeigt, eingerichtet ist;
wobei das Alarmmittel (51) des weiteren dazu eingerichtet ist, auf das Vergleichsmittel (41) zu reagieren, um einen Alarm an einen Fahrer des Fahrzeugs zu übermitteln, der einen platten Reifen anzeigt, wenn ein Signal vom Vergleichsmittel (41) erzeugt wird, das solch ein Ansteigen der Amplitude anzeigt.

10. Ein Kraftfahrzeug, **dadurch gekennzeichnet, dass** es ein System zur automatischen Erkennung von Abweichungen im Reifenluftdruck nach einem der vorangehenden Ansprüche umfasst.

## Revendications

1. Système de détection automatique d'anomalies de la pression de gonflage de pneumatiques d'un véhicule automobile, ledit système comprenant :
des moyens (11, 12, 13, 14) pour générer un signal électrique respectif indicatif d'accélérations verticales subies par chaque pneumatique respectif (1, 2, 3, 4) dudit véhicule ;
***caractérisé en ce qu*'**il comprend de plus :
des moyens filtrants (21) pour filtrer lesdits signaux électriques respectifs en provenance desdits moyens de génération (11, 12, 13, 14) afin d'obtenir des signaux électriques filtrés dans les bandes de fréquences 5-10 Hz et 20-30 Hz ;
des moyens (31) pour déterminer une valeur quadratique moyenne respective sur une durée prédéterminée à partir de chacun desdits signaux électriques filtrés ;
des moyens comparateurs (41) pour comparer lesdites valeurs quadratiques moyennes respectives déterminées des accélérations verticales subies par chaque dit pneumatique respectif (1, 2, 3, 4) avec les valeurs quadratiques moyennes respectives déterminées des accélérations verticales subies par les autres pneumatiques (1, 2, 3, 4) dudit véhicule, et pour générer un signal indicatif d'une différence entre celles-ci ; et
des moyens d'alarme (51) répondant auxdits moyens comparateurs (41) pour fournir une alarme au conducteur dudit véhicule lorsque ledit signal généré par lesdits moyens comparateurs (41) indique qu'il y a une différence entre l'une desdites valeurs quadratiques moyennes respectives déterminées des accélérations subies et les autres, supérieure à une valeur prédéterminée.

2. Système de détection automatique d'anomalies de la pression de gonflage de pneumatiques de véhicules automobiles selon la revendication 1,
***caractérisé en ce que*** les moyens (11, 12, 13, 14) pour générer un signal électrique respectif indicatif d'accélérations verticales subies par chaque pneumatique respectif (1, 2, 3, 4) dudit véhicule comprennent un capteur d'accélération respectif placé sur un élément de masse non suspendue d'une suspension de pneumatique respective dudit véhicule.

3. Système de détection automatique d'anomalies de la pression de gonflage de pneumatiques de véhicules automobiles selon la revendication 1,
***caractérisé en ce que*** les moyens (11, 12, 13, 14) pour générer un signal électrique respectif indicatif d'accélérations verticales subies par chaque pneumatique respectif (1, 2, 3, 4) dudit véhicule comprennent un capteur de déplacement respectif, positionné entre un élément de masse suspendue dudit véhicule et un élément de masse non suspendue d'une suspension de pneumatique respective dudit véhicule.

4. Système de détection automatique d'anomalies de la pression de gonflage de pneumatiques de véhicules automobiles selon l'une quelconque des revendications 1 à 3, ***caractérisé en ce que*** ladite durée prédéterminée est d'au moins 2 minutes.

5. Système de détection automatique d'anomalies de la pression de gonflage de pneumatiques de véhicules automobiles selon l'une quelconque des revendications 1 à 3, ***caractérisé en ce que*** ladite durée prédéterminée est comprise entre 2 et 5 minutes.

6. Système de détection automatique d'anomalies de la pression de gonflage de pneumatiques de véhicules automobiles selon l'une quelconque des revendications 1 à 3, ***caractérisé en ce que*** ladite durée prédéterminée est d'au moins 5 minutes.

7. Système de détection automatique d'anomalies de la pression de gonflage de pneumatiques de véhicules automobiles selon l'une quelconque des revendications précédentes, ***caractérisé en ce que*** lesdits moyens comparateurs (41) sont en outre prévus pour comparer lesdites valeurs quadratiques moyennes respectives déterminées des accélérations verticales subies par chaque dit pneumatique respectif (1, 2, 3, 4) avec une valeur limite prédéterminée, et pour générer un signal indiquant que ladite valeur limite a été dépassée ; et lesdits moyens d'alarme (51) étant en ouvre prévus pour répondre auxdits moyens comparateurs (41) en fournissant une alarme au conducteur dudit véhicule lorsqu'un signal indicatif que ladite valeur limite a été dépassée est généré par lesdits moyens comparateurs (41).

8. Système de détection automatique d'anomalies de la pression de gonflage de pneumatiques de véhicules automobiles selon l'une quelconque des revendications précédentes, ***caractérisé en ce que*** lesdits moyens d'alarme (51) comprennent des moyens pour fournir dans ladite alarme audit conducteur dudit véhicule une indication de quel pneumatique (1, 2, 3, 4) présente une anomalie de gonflage du pneumatique.

9. Système de détection automatique d'anomalies de la pression de gonflage de pneumatiques de véhicules automobiles selon l'une quelconque des revendications précédentes, ***caractérisé en ce que*** lesdits moyens comparateurs (41) sont en outre prévus pour déterminer une augmentation d'amplitude excédant une valeur prédéterminée dans le signal électrique indicatif d'une accélération verticale subie par un pneumatique (1, 2, 3, 4) pendant une durée prédéterminée, et pour générer un signal indicatif d'une telle augmentation d'amplitude ;
lesdits moyens d'alarme (51) étant en outre prévus pour répondre auxdits moyens comparateurs (41) en fournissant une alarme à un conducteur dudit véhicule indiquant un pneumatique à plat lorsqu'un signal indicatif d'une telle augmentation d'amplitude est généré par lesdits moyens comparateurs (41).

10. Véhicule automobile, ***caractérisé en ce qu*'**il comprend un système de détection automatique d'anomalies de la pression de gonflage de pneumatiques selon l'une quelconque des revendications précédentes.
